Europäisches Patentamt

European Patent Office

Office européen des brevets

(19)

(11) Numéro de publication: **0 282 831 B1**

## (12) FASCICULE DE BREVET EUROPEEN

(45) Date de publication de fascicule du brevet:
**02.10.91**

(51) Int. Cl.⁵: **B23K 35/00**, B23K 35/32,
C23C 28/00, F01D 5/28

(21) Numéro de dépôt: **88103273.4**

(22) Date de dépôt: **03.03.88**

(54) **Procédé de pose d'un revêtement protecteur sur une aube en alliage de titane et aube ainsi revêtue.**

(30) Priorité: **09.03.87 FR 8703172**

(43) Date de publication de la demande:
**21.09.88 Bulletin 88/38**

(45) Mention de la délivrance du brevet:
**02.10.91 Bulletin 91/40**

(84) Etats contractants désignés:
**AT BE CH DE ES FR GB GR IT LI LU NL SE**

(56) Documents cités:
**DE-A- 2 725 541        GB-A- 2 023 478
US-A- 3 060 557        US-A- 3 787 223
US-A- 3 951 612        US-A- 4 299 860**

(73) Titulaire: **GEC ALSTHOM SA
38, avenue Kléber
F-75116 Paris(FR)**

(72) Inventeur: **Coulon, André
1 rue des Bleuets
F-90160 Bessoncourt(FR)**

(74) Mandataire: **Weinmiller, Jürgen et al
Lennéstrasse 9 Postfach 24
W-8133 Feldafing(DE)**

Rank Xerox (UK) Business Services

## Description

La présente invention a trait à un procédé de pose d'un revêtement protecteur sur une aube et une aube ainsi revêtue.

Les aubes en alliage de titane présentent l'avantage d'avoir un rapport résistance/masse volumique élevé et également une tenue mécanique remarquable dans les milieux les plus corrosifs.

Toutefois, les aubes en alliage de titane utilisées dans les turbines à vapeur, spécialement lorsque leur vitesse périphérique est élevée, sont rapidement endommagées par les gouttelettes d'eau qui se forment dans la vapeur.

Il est donc nécessaire de protéger la périphérie de ces aubes.

L'aube en alliage de titane selon l'invention est caractérisé en ce qu'elle comporte à sa périphérie une couche de revêtement d'au moins 1 mm. d'épaisseur à base de carbures de titane, ou de nitrures de titane, ou de borures de titane, lesquels sont liés dans une matrice acier martensitique ou austenomartensitique inoxydable, ladite couche recouvrant une sous-couche de vanadium d'épaisseur comprise entre 0,5 et 1,5 mm.

Le procédé de pose de ce revêtement est le suivant : on dépose sur la partie de l'aube à revêtir de la poudre de vanadium, et on monte la température de la poudre jusqu'à une température dépassant légèrement le point de fusion du vanadium, la quantité de la poudre de vanadium déposée étant suffisante pour que l'épaisseur de la sous-couche de vanadium finale soit supérieure à 1 mm.

On dépose ensuite sur la couche de vanadium un mélange de poudre hétérogène comportant un tiers en poids environ de carbures de titane de nitrures de titane, ou de borures de titane liés par un acier martensitique ou austenomartensitique inoxydable comprenant notamment chrome et éventuellement du cobalt et/ou du molybdène et/ou du nickel on porte cette poudre à une température supérieure à sa température de fusion mais inférieure à la température de fusion du vanadium, la poudre hétérogène étant déposée à distance des bords de la sous-couche de vanadium de façon qu'il n'y ait jamais contact entre l'alliage en carbure, nitrure ou borure de titane et entre l'alliage de titane de l'aube.

Grâce à ce procédé une quantité minimale de vanadium est diluée dans l'aube en alliage de titane lors de la première étape. De même, lors de la seconde étape, la dilution de l'alliage dans la sous-couche de vanadium sera très limitée. De plus, la fusion de cette couche d'alliage n'aura aucun effet sur la liaison déjà réalisée entre sous-couche de vanadium et aube.

Pour limiter les dilutions le plus possible, on utilise de préférence un chauffage rapide et ponctuel, par exemple le chauffage par induction haute fréquence (avec inducteur mobile) ou un faisceau laser.

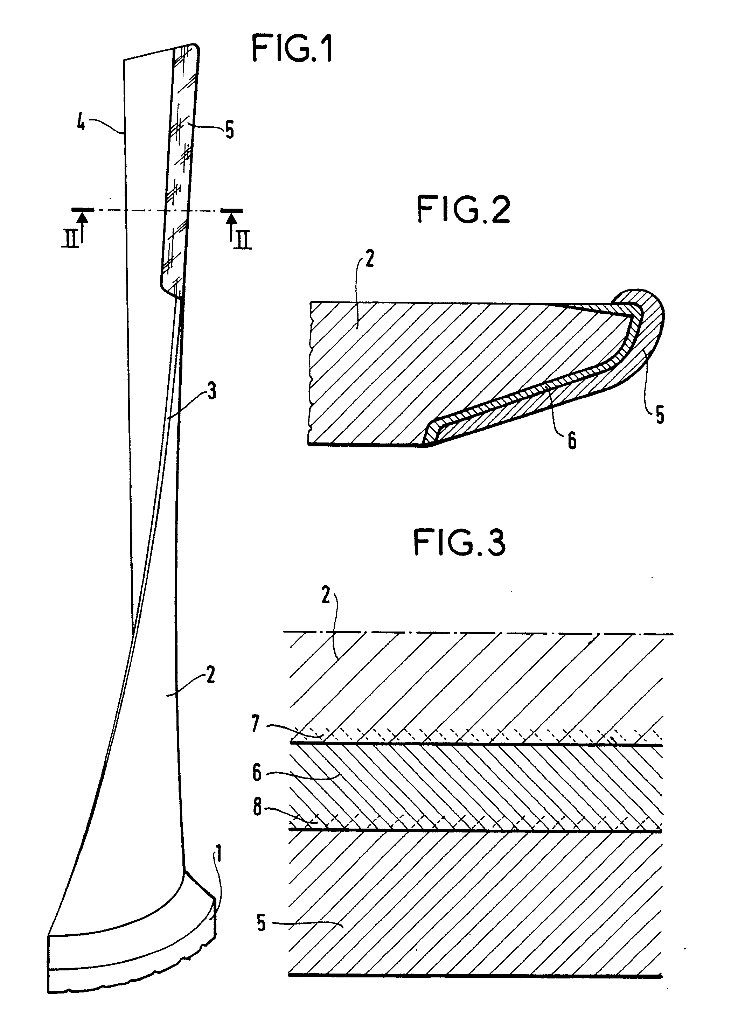

La présente invention sera mieux comprise à la lumière de la description qui va suivre dans laquelle la figure 1 représente une perspective de l'aube selon l'invention.

La figure 2 représente une coupe de l'aube de la figure 1.

La figure 3 représente une vue partielle de la coupe de la figure 2.

La figure 4 représente un appareillage permettent d'appliquer le procédé selon l'invention.

L'aube de turbine à vapeur représentée à la figure 1 comporte un pied 1 et une pale vrillée 2 comprenant un bord d'attaque 3 et un bord de fuite 4. A la partie haute de l'aube on a déposé le long du bord d'attaque 3 côté intrados une couche de revêtement protecteur 5. Cette couche de revêtement sur le bord d'attaque peut s'étendre sur l'extrados de la pale 2. Entre la pale et le revêtement final est disposée une sous-couche de vanadium 6 (figure 2).

L'aube est en alliage de titane comprenant 6 % d'aluminium et entre 3,5 et 4,5 % de vanadium.

Le procédé de pose du revêtement protecteur dans un exemple non limitatif de refusion par faisceau laser est le suivant :

La surface à revêtir de l'aube reçoit une préparation classique, puis on projette sur cette surface de la poudre de vanadium pratiquement pur ( > 98 %) composée de grains sphériques de taille inférieure à 0,5 $\mu$m, sous faisceau laser. La quantité déposée par refusion est suffisante pour que l'épaisseur de la sous-couche 6 de vanadium finale soit supérieure à 1mm.

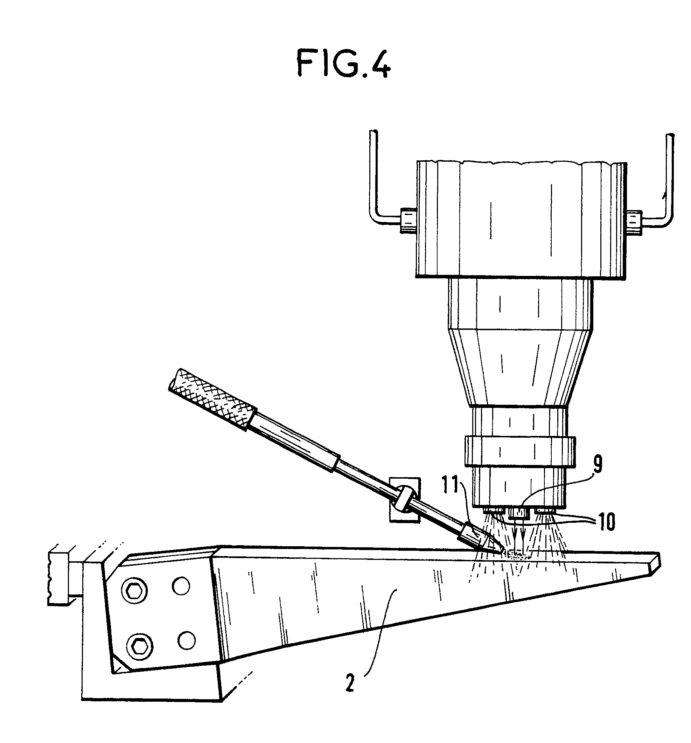

. Le faisceau de laser $CO_2$ 9 est dirigé sur la surface de la pale 2 de l'aube à revêtir. Ce faisceau est entouré d'une arrivée 10 de gaz inerte par exemple de l'argon qui vient également frapper la pale 2 (voir figure 4).

. Une buse 11 projette la poudre sur la surface de la pale 2 à revêtir.

Grâce à l'atmosphère inerte on évite les actions néfastes de l'oxygène, de l'hydrogène et de l'azote.

On élève ainsi la température de la poudre de vanadium entre 1950°C et 2000°C. La température de fusion du vanadium est de 1900°C et celle de l'alliage de titane de l'ordre de 2400°C. Il s'ensuit que le vanadium est fondu alors que le substrat en alliage de titane est pâteux, ce qui est idéal pour obtenir un accrochage parfait avec faible dilution de vanadium dans le substrat. L'alliage de titane qui comporte environ 4 % de vanadium peut tolérer par dilution (voir figure 3) une quantité de vanadium limitée conduisant localement à une structure lamellaire type Wydmanstätten appelé "Bêta".

L'épaisseur de cette couche 7 d'alliage avec vanadium dilué est très faible (inférieure à 1/10 mm).

Après refroidissement on dépose ensuite sur la sous-couche de vanadium 6 une poudre d'alliage associée à un liant.

Cette poudre hétérogène comporte en poids un tiers d'éléments durs qui peuvent être des carbures de titane, des nitrures de titane ou des borures de titane et un liant constitué par de l'acier martensitique comportant du chrome (9 à 18 %) plus éventuellement additions de molybdène (1 à 3 %) et cobalt (1 à 8 %) en vue de lui conférer des propriété d'inoxydabilité, ou de l'acier austenomartensitique comportant en plus 3 à 8 % de Nickel,

. Le granulométrie des carbures de titane sera inférieure à 0,5 $\mu$m et celle des borures ou des nitrures de titane inférieure à 0,2 $\mu$ m de préférence de l'ordre de 0,1 $\mu$m.

. Cette poudre hétérogène est déposée à 3 ou 4 mm des bords de la sous-couche de vanadium de façon qu'il n'y ait jamais contact entre l'alliage en carbure, nitrure ou borure de titane et entre l'alliage au titane de la pale.

Dans la solution de refusion par laser on se sert de l'appareil de la figure 4 pour projeter la poudre sur la sous-couche de vanadium et la faire fondre en la chauffant à une température de 50°C supérieure à la température de fusion de l'alliage (1400°C - 1500°C). Cette température étant très inférieure à la température de fusion du vanadium, il y aura une très faible dilution (voir figure 3) de la couche d'alliage dans le vanadium et la liaison vanadium/substrat sera maintenue intacte, la couche 8 de vanadium avec alliage dilué étant très faible (inférieure à 1/10 mm).

La couche d'alliage déposée sera d'environ 1,5 mm d'épaisseur. On procède, ensuite comme il est classique, à un traitement de détente vers 700°C. Lorsque le liant comporte de 3 à 8 % de nickel on procéde à un traitement de durcissement de la couche à base de carbures, nitrures ou borures de titane par maintien entre 450° et 500°C pendant 4 heures pour obtenir une dureté Rockwell HRC supérieure à 60.

Lorsque le liant comporte moins de 3 % de Nickel le traitement appliqué consiste en une trempe à une température supérieure à 1050° C en milieu azoté pour obtenir une dureté Rockwell supérieure à 60.

. Bien que le procédé de revêtement soit mis en oeuvre de préférence en projetant la poudre sous un faisceau laser avec projection de gaz inerte on peut utiliser encore d'autres moyens, notamment en procédant à une refusion de la pourdre projetée sous gaz inerte par plasma ou encore en procédant à la fusion de la poudre sous gaz inerte par chauffage induction haute fréquence.

Dans ce dernier cas on utilise de préférence un four à induction à haute fréquence muni d'un inducteur mobile. Le four étant sous vide ou sous atmosphère inerte (par exemple argon) et contenant l'aube, on préchauffe l'ambiance du four puis on chauffe la couche de poudre par spot de 30 mm de diamètre en maintenant le spot immobile de 20 à 75 secondes et en avançant de 20 mm en 20 mm.

On chauffe comme il a été dit dans une première opération la couche de poudre de vanadium pour la mettre en fusion. Puis dans un second cycle après dépôt de la poudre d'alliage sur la couche de vanadium on chauffe cette couche d'alliage pour la mettre en fusion sans mettre de vanadium en fusion.

**Revendications**

1. Procédé de pose d'un revêtement protecteur sur une aube (1) en alliage de titane caractérisé en ce qu'on dépose sur la partie de l'aube à revêtir de la poudre de vanadium pur en montant la température de la poudre jusqu'à une température dépassant légèrement le point de fusion du vanadium de façon à former une couche de vanadium (6), on dépose ensuite sur la couche de vanadium (6) un mélange de poudre hétérogène comportant un tiers environ en poids de carbures de titane, de nitrures de titane ou de borures de titane liés par un acier martensitique inoxydable ou austenomartensitique inoxydable comprenant notamment du chrome (9 à 18 %), la poudre hétérogène étant porté à une température supérieure à sa température de fusion et inférieure à la température de fusion du vanadium, la quantité de la poudre de vanadium déposée est suffisante pour que l'épaisseur de la sous-couche (6) de vanadium finale soit supérieure à 1 mm et la poudre hétérogène étant déposée à distance des bords de la sous-couche de vanadium de façon qu'il n'y ait jamais contact entre l'alliage en carbure, nitrure ou borure de titane et entre l'alliage de titane de l'aube.

2. Procédé selon la revendication 1 caractérisé en ce qu'on utilise de la poudre de nitrures ou de borures de titane de l'ordre de 0,1 $\mu$m de diamètre.

3. Procédé selon l'une des revendications précédentes, caractérisé en ce que les poudres sont projetées et fondues sous atmosphère inerte par faisceau laser.

4. Aube en alliage de titane caractérisé en ce qu'elle comporte à son bord d'attaque une couche de revêtement (5) d'au moins 1 mm d'épaisseur comportant environ un tiers en poids de carbures de titane ou de nitrures de titane ou de borures de titane liés par un acier martensitique inoxydable ou austenomartensitique inoxydable, ladite couche (5) recouvrant une sous-couche (6) de vanadium d'épaisseur comprise entre 0,5 et 1,5 mm, de façon qu'il n'y ait jamais contact entre l'alliage en carbure, nitrure ou borure de titane et entre l'alliage en titane de l'aube.

## Claims

1. A method of applying a protective coating on a titanium alloy blade (1) , characterized in that the portion of the blade to be coated has pure vanadium powder deposited thereon and the temperature of the powder is raised to a temperature which is slightly higher than the melting point of vanadium in order to form a layer of vanadium (6), thereafter, a heterogeneous powder mixture is deposited on the vanadium layer (6), said powder comprising about one third by weight of titanium carbides, titanium nitrides, or titanium borides, bonded by a stainless martensitic or austenomartensitic steel including, in particular, 9% to 18% chromium, the heterogeneous powder being raised to a temperature which exceeds its melting temperature and is less than the melting temperature of vanadium, with the quantity of the deposited vanadium powder being sufficient for the final thickness of the underlayer to exceed 1 mm, and said heterogeneous being deposited at a distance from the borders of the vanadium underlayer, so as to prevent in any case contacts between the titanium carbide, nitride or boride alloy and the titanium alloy of the blade.

2. A method according to claim 1, characterized in that a powder of titanium nitrides or titanium borides is used having a grain diameter of about 0,1 $\mu$m.

3. A method according to any preceding claim, characterized in that the powders are projected and melted under an inert atmosphere using a laser beam.

4. A titanium alloy blade, characterized in that it includes on its periphery a coating layer (5) which is at least 1 mm thick and which includes about one third by weight titanium carbides, or titanium nitrides, or titanium borides bonded by a stainless martensitic or austenomartensitic steel, said coating layer (5) covering an underlayer (6) of vanadium having a thickness lying between 0,5 mm and 1,5 mm, so as to prevent in any case contacts between titanium carbide, nitride or boride alloy and the titanium alloy of the blade.

## Patentansprüche

1. Verfahren zum Aufbringen einer Schutzschicht auf eine aus einer Titanlegierung bestehenden Turbinenschaufel (1), dadurch gekennzeichnet, daß man auf den zu überziehenden Abschnitt der Schaufel reines Vanadiumpulver unter Erhöhung der Temperatur des Pulvers auf eine Temperatur aufbringt, die den Schmelzpunkt des Vanadiums leicht übersteigt, derart, daß eine Vanadiumschicht (6) gebildet wird, daß man anschließend auf der Vanadiumschicht (6) eine heterogene Pulvermischung aufbringt, die ungefähr 1/3 Gewichtsanteile Titankarbid, Titannitrid oder Titanborid aufweist, das durch nichtoxidierbaren martensitischen oder austenitisch-martensitischen Stahl gebunden ist, der hauptsächlich Chrom (9 bis 18%) enthält, daß das heterogene Pulver auf eine Temperatur oberhalb seiner Schmelztemperatur, aber unterhalb der Schmelztemperatur des Vanadiums erwärmt wird, daß die Menge des aufgebrachten Vanadiumpulvers ausreichend groß ist, damit die Enddicke der Vanadiumunterschicht (6) größer als 1 mm ist, wobei das heterogene Pulver in einem Abstand von den Rändern der Vanadiumunterschicht aufgebracht ist, derart, daß es niemals zur Berührung zwischen der Titankarbid-, Titannitrid- oder Titanboridlegierung und der Titanlegierung der Turbinenschaufel kommt.

2. Verfahren nach Anspruch 1, dadurch gekennzeichnet, daß Titannitrid- oder Titanboridpulver mit einem Korndurchmesser von etwa 0,1 um verwendet wird.

3. Verfahren nach einem der vorhergehenden Ansprüche, dadurch gekennzeichnet, daß die Pulver aufgestäubt und durch Laserstrahl unter inerter Atomsphäre geschmolzen werden.

4. Turbinenschaufel aus einer Titanlegierung, dadurch gekennzeichnet, daß sie an ihrer Vorderkante eine Überzugsschicht (5) mit einer Dicke von mindestens 1 mm aufweist, die in Gewichtsanteilen mindestens 1/3 Titankarbid oder Titannitrid oder Titanborid aufweist, das durch einen nichtoxidierbaren martensitischen oder austenitisch-martensitischen Stahl gebunden ist, wobei die Schicht (5) eine Vanadiumunterschicht (6) mit einer Dicke zwischen 0,5 und 1,5 mm bedeckt, derart, daß es niemals zur Berührung zwischen der Titankarbid-, Titannitrid- oder Titanboridlegierung und der Titanlegierung der Schaufel kommt.

EP 0 282 831 B1

# FIG.1

# FIG.2

# FIG.3

# FIG.4